# EUROPEAN PATENT APPLICATION

(11) **EP 4 675 320 A1**
(43) Date of publication of application: **07.01.2026**
(21) Application number: 24898222.5
(22) Date of filing: 29.11.2024
(51) Int. Cl.: G02B 6/122, G02B 6/136, H10D 30/67, G02F 1/017, H10F 99/00, G02B 6/12

(54) **SUBSTRATE HAVING OPTICAL WAVEGUIDE FORMED THEREIN AND DEVICE COMPRISING SAME**

(30) Priority: 29.11.2023 KR 20230169348; 11.11.2024 KR 20240159164
(71) Applicant: Seoul National University R&DB Foundation, Seoul 08826 (KR)
(72) Inventor: KWAK, Jeong Hun, Seoul 08826 (KR); BAEK, Geun Woo, Seoul 08826 (KR)
(74) Representative: TRBL Intellectual Property
(86) International application number: PCT/KR2024/019324
(87) International publication number: WO 2025/116628

(57) **Abstract**

The present invention relates to a substrate comprising a patterned optical waveguide, the substrate comprising: an optical waveguide formed on the substrate with directionality and extending in at least one direction; and a quantum dot layer formed on a surface of the optical waveguide, wherein the quantum dot layer comprises quantum dots dispersed in an organic medium.

## Description

### FIELD OF THE INVENTION

The present invention relates to a substrate having optical waveguides and a device including the same, and more particularly, to a substrate including optical waveguides applicable to communication devices, biosensors, quantum computing, and security devices.

### BACKGROUND OF THE INVENTION

An optical waveguide is an optical component used for guiding and transmitting light, and is utilized in various fields such as communications, sensing, and optical computing. In general, optical waveguides serve to transmit optical signals by confining the path of light using specific structures and materials to guide it in a desired direction. Conventional optical waveguide technologies mainly use materials such as silicon (Si), indium phosphide (InP), or silica (SiO₂), and various structural designs have been applied to enhance light transmission efficiency and controllability.

However, traditional optical waveguides exhibit optimal transmission characteristics only at specific wavelengths or have limited responsiveness to external electrical or optical control. To overcome these drawbacks, research is being conducted to introduce novel structures or materials into optical waveguides.

### BRIEF DESCRIPTION OF THE INVENTION

### Problem to be Solved

The object of the present invention is to provide an optical waveguide fabricated using quantum dots as a photosensitive material. The invention proposes a technique for constructing a patterned optical waveguide with quantum dots, enabling facile adjustment of the wavelength to be collected according to the size of the quantum dots. In addition, the invention proposes a technique for deriving a plurality of outputs having different colors from a single light source.

### Means for Solving the Problem

A substrate including a patterned optical waveguide according to an embodiment of the present invention may include: an optical waveguide formed on the substrate with directionality and extending in at least one direction; and a quantum dot layer formed on the surface of the optical waveguide, wherein the quantum dot layer may comprise quantum dots dispersed in an organic medium.

According to one embodiment, the optical waveguide may include at least one branching point at which the waveguide is divided into a plurality of branches, and the optical waveguides at the branching point may have different wavelength ranges in which light can be collected.

According to one embodiment, the quantum dot layers of the branched optical waveguides may have different average quantum dot sizes.

According to one embodiment, the optical waveguide may include one optical input unit and a plurality of optical output units.

According to one embodiment, a plurality of optical waveguides may be formed to constitute an optical waveguide array.

According to one embodiment, the organic medium may include polyvinylpyrrolidone (PVP).

According to one embodiment, the substrate may further include a cladding layer formed between the optical waveguide and the substrate.

According to one embodiment, the cladding layer may include an SU-8 material.

According to another embodiment of the present invention, in a device including a substrate through which light passes via an optical waveguide, the device may be one of a communication device, a biosensor, a quantum computing device, or a security device, and the substrate may be the substrate according to claim 1.

According to still another embodiment of the present invention, a method of manufacturing a substrate including a patterned optical waveguide may include: forming a quantum dot layer on a substrate; and patterning the quantum dot layer to form the optical waveguide.

According to one embodiment, the method may further include forming a masking layer prior to the step of forming the quantum dot layer.

According to one embodiment, the step of forming the optical waveguide may further include arranging a plurality of optical waveguides to form an optical waveguide array.

### Effect of the Invention

Through the substrate with a patterned optical waveguide proposed in the present invention and a device to which the substrate is applied, incident light of an arbitrary wavelength can be converted into light of a different wavelength.

In addition, light of various wavelengths can be output without the aid of a separate external wavelength division device.

However, the effects of the present invention are not limited to those described above, and include all effects naturally achieved by the various configurations proposed in the present invention.

### BRIEF DESCRIPTION OF THE DRAWINGS

Fig. 1 is a flowchart illustrating a method of manufacturing a substrate including a patterned optical waveguide according to an embodiment of the present invention.
Fig. 2 is a flowchart illustrating a method of manufacturing a device including a substrate having an optical waveguide formed thereon according to an embodiment of the present invention.
Fig. 3 is a schematic view of a device including a substrate having an optical waveguide formed thereon according to an embodiment of the present invention.
Fig. 4 is a schematic view illustrating wavelength band conversion through a device according to an embodiment of the present invention.
Fig. 5 is a schematic view for an experiment using a device manufactured by adjusting the quantum dot size according to an embodiment of the present invention.
Fig. 6 is a graph showing variations in photocurrent, leakage current, and turn-on voltage of a device according to an embodiment of the present invention.

### DETAILED DESCRIPTION OF THE INVENTION

The embodiments of the present invention are provided by way of example for the purpose of illustrating the technical spirit of the invention. The scope of rights according to the present invention is not limited to the embodiments set forth below or the specific descriptions thereof.

All technical and scientific terms used in the present invention, unless otherwise defined, have the meanings generally understood by those skilled in the art to which the present invention pertains. All terms used herein are selected for the purpose of more clearly describing the present invention and are not intended to limit the scope of the invention.

Expressions such as "comprising," "including," and "having" used in the present invention are to be interpreted as open-ended terms that allow for the inclusion of other embodiments, unless otherwise specifically stated in the relevant phrases or sentences.

Singular expressions described in the present invention may, unless otherwise stated, include the plural form as well, and this shall also apply to the singular expressions used in the claims.

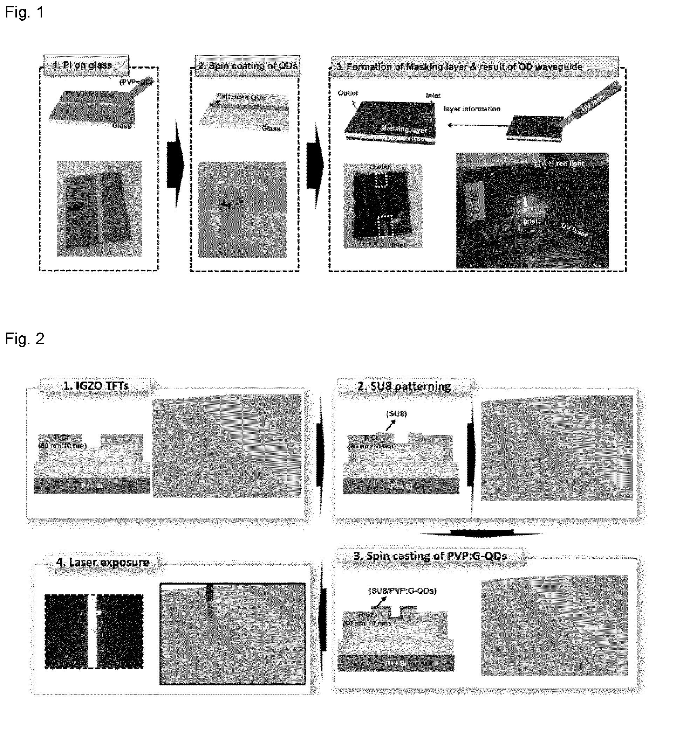

Hereinafter, a substrate including a patterned optical waveguide and a device including the substrate will be described in detail with reference to Figs. 1 through 5.

Fig. 1 relates to a method of manufacturing a substrate including a patterned optical waveguide according to an embodiment of the present invention.

The substrate including a patterned optical waveguide according to an embodiment of the present invention may include: an optical waveguide formed on the substrate with directionality and extending in at least one direction; and a quantum dot layer formed on the surface of the optical waveguide, wherein the quantum dot layer may be formed by an organic medium in which quantum dots are dispersed.

The quantum dots contained in the quantum dot layer may be selected from II-VI group semiconductor quantum dots (e.g., cadmium selenide (CdSe), cadmium sulfide (CdS), cadmium telluride (CdTe), zinc sulfide (ZnS), zinc selenide (ZnSe)), III-V group semiconductor quantum dots (e.g., indium phosphide (InP), gallium arsenide (GaAs), gallium nitride (GaN)), IV-VI group semiconductor quantum dots (e.g., lead sulfide (PbS), lead selenide (PbSe)), carbon quantum dots, silicon quantum dots, or quantum dots of other materials.

The optical waveguide may include at least one branching point at which it is divided into a plurality of branches, and the branched optical waveguides may have different wavelength ranges in which light can be collected.

Through the branching point, a light source or another form of energy may be input. The branching point may be connected to a light input unit so that light in an arbitrary wavelength range can be input from the light source.

According to one embodiment, the branched optical waveguides may each have different wavelength ranges because the quantum dot layers thereof are composed of quantum dots having different sizes. For example, when the quantum dot layer is composed of cadmium selenide (CdSe) quantum dots that emit red (R), green (G), and blue (B) light, the quantum dots may have sizes of about 4 to 6 nm for red, about 2.5 to 3 nm for green, and 2 nm or less for blue. The size of the quantum dots may vary depending on the material of the quantum dots. Furthermore, the color of light output from the optical waveguide according to the present invention is not limited to R, G, and B.

According to one embodiment, the optical waveguide may include one optical input unit and a plurality of optical output units. When light of an arbitrary wavelength is input through the single optical input unit, light of different wavelengths may be output through the respective optical output units according to the wavelength characteristics of the quantum dot layers formed in each optical waveguide.

According to one embodiment, a plurality of optical waveguides may be formed to constitute an optical waveguide array. The optical waveguide array may be formed on the substrate as a plurality of optical waveguides.

According to one embodiment, the organic medium may include polyvinylpyrrolidone (PVP). The organic medium may alternatively be selected from polyvinyl alcohol (PVA), polyethylene glycol (PEG), hydroxypropyl methylcellulose (HPMC), or carboxymethyl cellulose (CMC), in addition to PVP.

According to one embodiment, a cladding layer may further be included between the optical waveguide and the substrate. Also, according to one embodiment, the cladding layer may include an SU-8 material. The introduction of SU-8 may enhance the stability of the device.

A method of manufacturing a substrate including a patterned optical waveguide according to an embodiment of the present invention may include: forming a quantum dot layer on a substrate; and patterning the quantum dot layer to form the optical waveguide. The method may further include a step of forming a housing after forming the optical waveguide.

According to one embodiment, the method may further include a step of forming a masking layer prior to the step of forming the quantum dot layer.

According to one embodiment, the step of forming the optical waveguide may further include arranging a plurality of optical waveguides to form an optical waveguide array.

One embodiment will now be described with reference to Fig. 1. An optical waveguide may be formed on a glass substrate. A masking layer for optical waveguide patterning may be formed on the glass substrate. The masking layer may be formed using a polyimide tape.

After spin-coating a solution prepared by mixing an organic solvent and quantum dots onto the substrate having the masking layer, the masking layer may be lifted off, thereby forming the patterned optical waveguide. According to another embodiment of the present invention, a simple printing method or spray coating method may also be used. In the present embodiment, quantum dots capable of concentrating red (R) light were used.

After the step of forming the optical waveguide, a housing may be formed on the substrate so that input light is not guided on areas of the substrate other than where the optical waveguide is formed. In the present embodiment, the housing was formed on the substrate using insulating tape.

As a result of inputting a UV laser into the substrate including the patterned optical waveguide fabricated according to the above embodiment, it was confirmed that light in the red wavelength range was emitted.

Fig. 2 illustrates a schematic structure of a device according to an embodiment of the present invention and the manufacturing steps thereof. A method for manufacturing a device including a substrate having an optical waveguide formed thereon, as one embodiment, will now be described in detail with reference to Fig. 2.

In a device including a substrate through which light passes via an optical waveguide, the device may be a communication device, a biosensor, a quantum computing device, or a security device, and the substrate may be a substrate including a patterned optical waveguide formed according to the present invention.

In the present embodiment, the optical waveguide was formed on an indium gallium zinc oxide (IGZO)-based thin-film transistor (TFT), which is an oxide semiconductor. The IGZO TFT is formed with key components including a substrate, an insulating layer, a semiconductor channel layer, a source electrode, and a drain electrode. The substrate is a heavily doped p-type silicon substrate (P++ Si substrate), the insulating layer is silicon dioxide (SiO₂) formed by a plasma-enhanced chemical vapor deposition (PECVD) process, and has a thickness of 200 nm. The semiconductor channel layer is formed of IGZO, and the source and drain electrodes are formed of titanium (Ti, 60 nm) and chromium (Cr, 10 nm).

Next, a cladding layer may be formed on the IGZO TFT. The cladding layer may be formed over the source electrode, drain electrode, and semiconductor channel. In the present embodiment, the cladding layer was formed using an SU-8 material.

After forming the cladding layer, a quantum dot dispersion containing an organic solvent and quantum dots dispersed therein may be applied onto the cladding layer, and a uniform-thickness quantum dot layer may be formed by spin coating. In the present embodiment, quantum dots emitting green light in the 550 nm wavelength range were used.

As a result of inputting a UV laser into the device including the substrate with the optical waveguide formed as described above, it was confirmed that light in the green wavelength range was emitted.

In another embodiment, a neuromorphic device including the optical waveguide of the present invention may be fabricated. The neuromorphic device may include an input neuron unit, an output neuron unit, a weight control unit, a synapse array, and the optical waveguide according to the above-described embodiment.

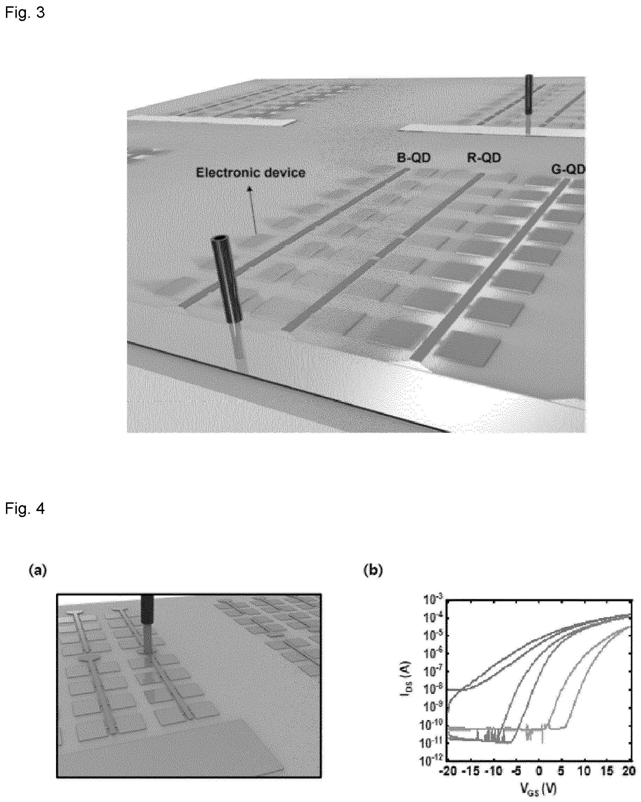

Fig. 3 is a schematic view of a device including a substrate having an optical waveguide formed thereon according to an embodiment of the present invention. According to the schematic view, when a single light source (e.g., a UV laser) is applied to the optical input unit of the substrate, light of different colors is output through the respective optical output units.

In the optical waveguide of the present invention, the quantum dot layer is formed from a mixture of an organic medium and quantum dots, and the wavelength to be concentrated can be easily controlled according to the size of the quantum dots.

Since the optical waveguide and the substrate including the optical waveguide according to an embodiment of the present invention control the wavelength based on the size of the quantum dots in the optical waveguide, it is possible to tune the wavelength without a separate external device for wavelength division.

Unlike conventional techniques that allow transmission of only a specific wavelength, an embodiment of the present invention enables conversion of incident light into another wavelength range, thereby offering an advantage in wavelength transformation.

Fig. 4 is a schematic view illustrating wavelength conversion through a device according to an embodiment of the present invention. In this embodiment, a laser with a wavelength of 465 nm was used as the light source. It was confirmed that UV-range light applied through the optical waveguide was converted to light with a wavelength of 550 nm and delivered to the semiconductor channel layer, thereby generating a photocurrent.

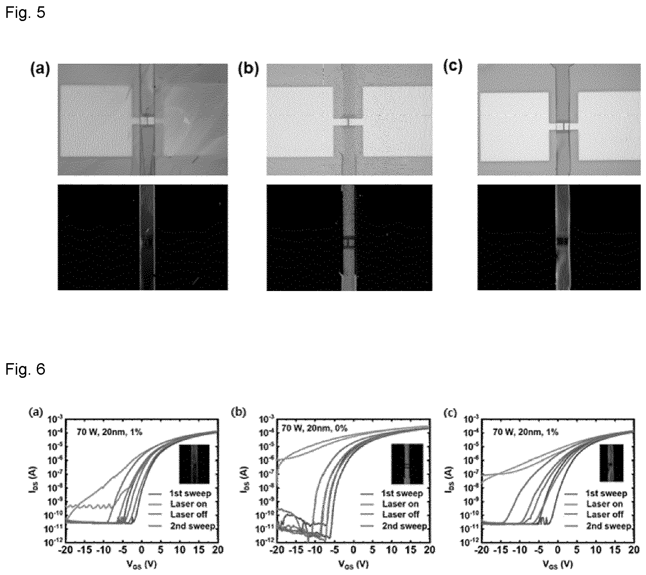

Fig. 5 shows the results of applying the optical waveguide fabrication method of the present invention using quantum dots of different emission wavelengths.

The upper images in Fig. 5 show the optical waveguides before laser input, and the lower images show the waveguides after laser input.

In Fig. 5(a), the optical waveguide was fabricated using a quantum dot layer composed of an organic medium and quantum dots emitting red (R) light.

In Fig. 5(b), the quantum dot layer was formed using quantum dots emitting green (G) light.

In Fig. 5(c), the optical waveguide was formed using an organic medium and quantum dots emitting blue (B) light.

The graph in Fig. 6 shows the photoresponse measurements of the device including the substrate with the optical waveguide formed as illustrated in Fig. 4.

The photocurrents of TFTs formed with optical waveguides based on R, G, and B quantum dots were measured, and changes in leakage current under negative gate bias and variations in turn-on voltage before and after laser illumination were recorded. These results are presented in the graphs shown in Fig. 6.

Fig. 6(a) is a graph of photocurrent measurements after forming an optical waveguide based on R (red-emitting) quantum dots. The red curve confirms the generation of photocurrent upon UV laser irradiation. The blue curve in Fig. 6(a) shows that after turning off the laser, the threshold voltage shifted in the negative direction compared to the initial transfer curve. The green curve indicates that after applying a bias of Vg = 0 V and Vd = -10 V for 15 seconds to remove trapped electrons in the IGZO channel, the threshold voltage recovered.

Fig. 6(b) shows the variation in photocurrent after forming an optical waveguide based on G (green-emitting) quantum dots, and Fig. 6(c) shows the corresponding result for B (blue-emitting) quantum dots.

Both graphs in Fig. 6(b) and Fig. 6(c), similar to Fig. 6(a), demonstrate that photocurrent was generated upon UV laser input and that the threshold voltage shifted in the negative direction after the laser was turned off.

Through the three graphs in Figs. 6(a) to 6(c), it is confirmed that the optical waveguides based on R, G, and B quantum dots, as embodiments of the present invention, all exhibit photoresponsiveness.

The present invention proposes a technology that enhances light transmission efficiency and controllability by applying quantum dots to conventional optical waveguides. According to an embodiment of the present invention, there is an advantage in that the absorption and emission wavelengths of light can be adjusted without the need for additional external devices. Since the wavelength can be easily controlled by adjusting the size and material composition of the quantum dots, it is expected that stable light transmission over a broader wavelength range can be achieved.

The above description is merely illustrative of the technical spirit of the present invention, and it will be apparent to those skilled in the art that various modifications and alterations can be made without departing from the essential characteristics of the present invention. Accordingly, the embodiments disclosed herein are not intended to limit the technical spirit of the present invention but to describe it, and the scope of the technical spirit of the present invention is not limited by these embodiments. The scope of protection of the present invention shall be interpreted based on the claims below, and all technical ideas falling within the equivalent scope thereof shall be construed as being included within the scope of rights of the present invention.

## Claims

1. A substrate comprising a patterned optical waveguide, the substrate comprising:
- an optical waveguide formed on the substrate with directionality and extending in at least one direction; and
- a quantum dot layer formed on a surface of the optical waveguide,
wherein the quantum dot layer comprises quantum dots dispersed in an organic medium.

2. The substrate comprising a patterned optical waveguide according to claim 1, wherein the optical waveguide includes at least one branching point at which the waveguide is divided into a plurality of branches, and the branched optical waveguides have different wavelength ranges in which light can be collected.

3. The substrate comprising a patterned optical waveguide according to claim 1, wherein the quantum dot layers of the branched optical waveguides have different average quantum dot sizes.

4. The substrate comprising a patterned optical waveguide according to claim 1, wherein the optical waveguide includes one optical input unit and a plurality of optical output units.

5. The substrate comprising a patterned optical waveguide according to claim 1, wherein a plurality of the optical waveguides are formed to constitute an optical waveguide array.

6. The substrate comprising a patterned optical waveguide according to claim 1, wherein the organic medium comprises polyvinylpyrrolidone (PVP).

7. The substrate comprising a patterned optical waveguide according to any one of claim 1, further comprising a cladding layer formed between the optical waveguide and the substrate.

8. The substrate comprising a patterned optical waveguide according to claim 7, wherein the cladding layer comprises an SU-8 material.

9. A device comprising a substrate through which light passes via an optical waveguide, wherein the device is one of a communication device, a biosensor, a quantum computing device, or a security device, and the substrate is the substrate according to claim 1.

10. A method of manufacturing a substrate comprising a patterned optical waveguide, the method comprising:
- forming a quantum dot layer on a substrate; and
- patterning the quantum dot layer to form the optical waveguide.

11. The method of manufacturing a substrate comprising a patterned optical waveguide according to claim 10, further comprising forming a masking layer prior to the step of forming the quantum dot layer.

12. The method of manufacturing a substrate comprising a patterned optical waveguide according to claim 10, wherein the step of forming the optical waveguide further comprises arranging a plurality of optical waveguides to form an optical waveguide array.

13. The method of manufacturing a substrate comprising a patterned optical waveguide according to claim 10, wherein the substrate is the substrate according to claim 1.
